# EUROPEAN PATENT APPLICATION

(11) **EP 4 755 720 A1**
(43) Date of publication of application: **10.06.2026**
(21) Application number: 24847604.6
(22) Date of filing: 27.03.2024
(51) Int. Cl.: B60R 11/02

(54) **MOVABLE BRACKET FOR DISPLAY SCREEN, AND VEHICLE**

(30) Priority: 28.07.2023 CN 202322022427 U
(71) Applicant: BYD Company Limited, Shenzhen, Guangdong 518118 (CN)
(72) Inventor: BAI, Mao, Shenzhen, Guangdong 518118 (CN); YANG, Dongsheng, Shenzhen, Guangdong 518118 (CN); LIU, Ke, Shenzhen, Guangdong 518118 (CN); QUAN, Mingzhu, Shenzhen, Guangdong 518118 (CN)
(74) Representative: Mathys & Squire
(86) International application number: PCT/CN2024/084069
(87) International publication number: WO 2025/025638

(57) **Abstract**

This application relates to a movable bracket for a display screen. The movable bracket includes a fixed support, a flipping mechanism, and a moving mechanism. The flipping mechanism is rotatably connected to the fixed support, and the moving mechanism is disposed on the flipping mechanism; and the flipping mechanism is configured to drive the display screen to rotate relative to the fixed support, and the moving mechanism is configured to drive the display screen to move to adjust a distance between the display screen and the fixed support. The movable bracket in this application can improve the user's experience while viewing a display screen. This application further provides a vehicle.

## Description

This application claims priority to Chinese Patent Application No. 202322022427.9, filed with the China National Intellectual Property Administration on July 28, 2023 and entitled "MOVABLE BRACKET FOR DISPLAY SCREEN AND VEHICLE", which is incorporated herein by reference in its entirety.

### TECHNICAL FIELD

This application relates to the field of vehicle technologies, and in particular, to a movable bracket for a display screen and a vehicle having the movable bracket.

### BACKGROUND

To improve travel experience of users, a display screen is generally mounted in a vehicle as an in-vehicle comfort and entertainment accessory. The display screen is generally fixed to an interior compartment of the vehicle by using a movable bracket, and the display screen is driven to flip by using the movable bracket to adjust an angle of the display screen relative to a user, so that the user can view a displayed image on the display screen.

However, simply adjusting the angle of the display screen relative to the user cannot accommodate viewing requirements of users of different heights or at different height positions, thereby reducing the user experience.

### SUMMARY

To resolve the foregoing problem, this application provides a movable bracket for a display screen. By specifically optimizing a structure of the movable bracket, a height position and an angle position of the display screen can be adjusted, so as to improve the user's experience while viewing the display screen. Specifically, the following solutions are included:

This application provides a movable bracket for a display screen. The movable bracket includes a fixed support, a flipping mechanism, and a moving mechanism. The flipping mechanism is rotatably connected to the fixed support, and the moving mechanism is disposed on the flipping mechanism; and the flipping mechanism is configured to drive the display screen to rotate relative to the fixed support, and the moving mechanism is configured to drive the display screen to move to adjust a distance between the display screen and the fixed support.

By providing the fixed support, the movable bracket in this application can achieve a support and positioning effect on the flipping mechanism or another functional structural member of the movable bracket, so as to ensure that the flipping mechanism or another functional structural member implements respective functions thereof. By arranging the flipping mechanism to be rotatably connected to the fixed support, it can be ensured that the fixed support achieves a support and positioning effect on the flipping mechanism, and the flipping mechanism can be rotated relative to the fixed support, so as to drive the display screen fixed to the flipping mechanism to rotate relative to the fixed support. An angle of the display screen relative to the fixed support is adjusted to accommodate viewing requirements of the user at different viewing angles.

By providing the flipping mechanism, the movable bracket in this application enables the display screen to display an image at different angles and positions, so as to accommodate viewing of users of different heights or with different requirements for the height of the display screen. Further, an adjustable range and dimensions of position of the display screen can be improved, so as to improve the user experience of the movable bracket in this application.

In an embodiment, the movable bracket further includes a flipping motor; and the flipping motor is fixed to the fixed support and drivingly connected to the flipping mechanism, and the flipping motor is configured to drive the flipping mechanism to drive the display screen to rotate.

In this embodiment, by providing the flipping motor, the flipping mechanism can be driven to rotate, that is, a driving force is provided for rotation of the flipping mechanism, thereby driving the display screen to rotate.

In an embodiment, the flipping motor is drivingly connected to the flipping mechanism through a gear set.

In this embodiment, by providing the gear set, a transmission effect between the flipping motor and the flipping mechanism is achieved, and stability and smooth motion effects of the flipping motor driving the flipping mechanism to rotate can be improved, thereby avoiding a case in which the moving mechanism and the display screen may shake due to an excessively high rotational speed when the flipping mechanism drives the display screen to rotate, which affects working stability of the display screen. That is, by providing the gear set, a protection effect can be achieved on the display screen, thereby further improving the performance of the movable bracket in this application. In addition, rotation of the flipping mechanism is driven through cooperation between the gear set and the flipping motor, so as to simplify structural design of the flipping mechanism and reduce manufacturing costs of the movable bracket in this application while a rotation function of the flipping mechanism is implemented.

In an embodiment, the gear set includes a first gear and a second gear. An end of the flipping mechanism that is close to the flipping motor is fixed to a rotating shaft. The first gear is coaxially fixed to a motor shaft of the flipping motor, and the second gear is coaxially fixed to the rotating shaft. The first gear is meshed with the second gear.

In this embodiment, by arranging the first gear to be meshed with the second gear, an effect of transmission connection between the flipping motor and the flipping mechanism can be achieved, thereby enabling the flipping motor to drive the flipping mechanism to rotate and drive the display screen to rotate.

In an embodiment, a gear radius of the first gear is greater than a gear radius of the second gear.

In this embodiment, by setting the gear radius of the first gear to be greater than the gear radius of the second gear, a deceleration effect of the gear set can be achieved to improve smoothness during rotation of the flipping mechanism.

In an embodiment, the moving mechanism includes a moving member movable relative to the flipping mechanism, and the moving member is configured to fix the display screen.

In this embodiment, by arranging the moving member to slide in a direction parallel to a length direction of the flipping mechanism, the moving member drives the display screen to slide in the length direction of the flipping mechanism, and a distance between the display screen and the fixed support can be adjusted, thereby enabling the display screen to be located at different height positions to accommodate viewing requirements of the user for different height positions of the display screen.

In an embodiment, the moving mechanism includes a moving motor, the moving motor is fixed to the flipping mechanism and drivingly connected to the moving member, and the moving motor is configured to drive the moving member to drive the display screen to slide.

In this embodiment, by providing the moving motor, a driving force can be provided for sliding of the moving member relative to the fixed support, so that the moving member can drive the display screen to slide relative to the fixed support.

In an embodiment, the moving mechanism further includes a lead screw, the moving member includes a screw sleeve sleeved around the lead screw, the lead screw is coaxially fixed to a motor shaft of the moving motor, and the lead screw rotates to drive the screw sleeve to cause the display screen to slide.

In this embodiment, by providing cooperation between the lead screw and the screw sleeve, a transmission connection between the moving motor and the moving member can be implemented, so that the moving motor can drive the moving member to drive the display screen to slide. In addition, transmission through the cooperation between the lead screw and the screw sleeve can improve smoothness and motion stability of the moving member driving the display screen to slide, so as to avoid a case in which the display screen shakes during sliding.

In an embodiment, the moving member further includes a connecting plate, and the connecting plate is a plate-like structure; and the connecting plate is fixedly connected between the screw sleeve and the display screen, and the screw sleeve drives the display screen to move through the connecting plate.

In an embodiment, a slide rail and a slide block that cooperate with each other are provided between the moving member and the flipping mechanism, the slide rail extends in a direction parallel to the length direction of the flipping mechanism, and the slide rail and the slide block are configured to limit sliding of the moving member in the length direction of the flipping mechanism.

In this embodiment, by providing cooperation between the slide rail and the slide block, the moving member can be limited to drive the display screen to slide in the length direction of the flipping mechanism, so as to avoid an undesirable phenomenon such as an offset or an inclination during sliding of the moving member, thereby avoiding reducing displacement accuracy and sliding effect of the display screen. That is, through cooperation between the slide rail and the slide block, moving accuracy of the display screen relative to the fixed support can be improved, and sliding effect and efficiency of the moving member relative to the flipping mechanism can be improved.

In an embodiment, there are two slide rails and two slide blocks, and the two slide rails and the two slide blocks are in a one-to-one correspondence. The two slide rails are relatively parallel and respectively located on two opposite sides of the moving member.

In an embodiment, a side wall of each slide rail is provided with at least one positioning groove, and the at least one positioning groove extends in the length direction of the flipping mechanism; and the slide block corresponding to the slide rail is convexly provided with at least one protrusion portion, and one protrusion portion extends into one positioning groove and can slide along the positioning groove, wherein a surface of the protrusion portion is attached to an inner wall of the positioning groove.

In this embodiment, by providing cooperation between the positioning groove and the protrusion portion, and arranging the surface of the protrusion portion to be attached to the inner wall of the positioning groove, a close cooperation effect can be achieved between the slide rail and the slide block, so as to improve cooperation stability of the slide rail and the slide block, and avoid a case of loosening or shaking of the slide rail and the slide block due to loose cooperation during sliding, thereby improving sliding stability of the moving member relative to the flipping mechanism.

In an embodiment, the slide block is fixedly disposed on a surface of the connecting plate that faces the flipping mechanism, and the slide rail is fixedly disposed on a surface that is of the flipping mechanism and that faces the connecting plate.

This application further provides a vehicle, including a display screen and the movable bracket in any of the foregoing embodiments. The movable bracket is fixed to an interior compartment of the vehicle, and the display screen is configured to display an image.

In the vehicle of this application, by providing the display screen, an image can be displayed to improve a sense of experience of the user.

Because the vehicle in this application is provided with the movable bracket in any of the foregoing embodiments, the vehicle in this application has all possible beneficial effects of the movable bracket in any of the foregoing embodiments.

In an embodiment, the interior compartment of the vehicle is provided with a receiving cavity, the fixed support of the movable bracket is fixed in the receiving cavity, and the flipping mechanism can drive the display screen to rotate and be received in the receiving cavity.

In this embodiment, by fixing the fixed support in the receiving cavity, the flipping mechanism, the moving mechanism, the display screen, or another functional structural member of the movable bracket can be received in the receiving cavity, so as to achieve an effect of receiving and hiding the movable bracket, thereby improving simplicity in design and beauty of the interior compartment of the vehicle.

In an embodiment, when the moving member of the movable bracket slides to a minimum distance from the fixed support, a length size of the receiving cavity is greater than a maximum distance between the display screen and the fixed support.

In this embodiment, the length size of the receiving cavity is set to be greater than the maximum distance between the display screen and the fixed support, so that the moving member can be received in the receiving cavity when not extending out.

In an embodiment, the fixed support is fixed to a top of the interior compartment; and the flipping mechanism is configured to drive the display screen to rotate out of the receiving cavity, and cause a display surface of the display screen to face a seat in the vehicle.

### BRIEF DESCRIPTION OF DRAWINGS

To describe technical solutions in embodiments of this application more clearly, the following briefly describes the accompanying drawings needed for use in the embodiments. Clearly, the accompanying drawings in the following description are some embodiments of this application. For a person of ordinary skill in the art, other accompanying drawings can be obtained based on these accompanying drawings without paying any creative work.
FIG. 1 is a schematic diagram of a working scenario of a vehicle of this application in an embodiment;
FIG. 2 is a schematic diagram of a structure of a movable bracket of a vehicle of this application from a side viewing angle in an embodiment;
FIG. 3 is a schematic diagram of a structure of a movable bracket of a vehicle of this application from a side viewing angle in an embodiment;
FIG. 4 is a schematic diagram of an exploded structure of a movable bracket of a vehicle of this application from a side viewing angle in an embodiment, with some portions of the structure hidden;
FIG. 5 is a schematic diagram of an exploded structure of a movable bracket of a vehicle of this application from a side viewing angle in the embodiment shown in FIG. 4 when some portions of the structure are hidden;
FIG. 6 is a schematic diagram of a cross-sectional structure of a movable bracket of a vehicle of this application from a side viewing angle in an embodiment;
FIG. 7 is a schematic diagram of a cross-sectional structure of a movable bracket of a vehicle of this application from another side viewing angle in an embodiment;
FIG. 8 is a schematic diagram of a structure of a movable bracket of a vehicle of this application from a side viewing angle in an embodiment;
FIG. 9 is a schematic diagram of a structure of a movable bracket of a vehicle of this application from another side viewing angle in an embodiment;
FIG. 10 is a schematic diagram of an exploded structure of a movable bracket of a vehicle of this application from a side viewing angle in an embodiment, with some portions of the structure hidden;
FIG. 11 is an enlarged schematic diagram of a partial structure of a movable bracket of a vehicle of this application when viewed from a side viewing angle at position A in the embodiment shown in FIG. 6;
FIG. 12 is a schematic diagram of a structure of a movable bracket of a vehicle of this application from a side viewing angle in the embodiment of FIG. 11 when some portions of the structure are hidden;
FIG. 13 is a schematic diagram of a structure of a movable bracket of a vehicle of this application from another side viewing angle in the embodiment of FIG. 11 when some portions of the structure are hidden;
FIG. 14 is a schematic diagram of an exploded structure of a movable bracket of a vehicle of this application from a side viewing angle in an embodiment, with some portions of the structure hidden; and
FIG. 15 is a schematic diagram of a structure of a movable bracket of a vehicle of this application from a side viewing angle in the embodiment of FIG. 14 when some portions of the structure are hidden.

### DESCRIPTION OF EMBODIMENTS

For ease of understanding of this application, the following provides a more comprehensive description of this application with reference to related accompanying drawings. Preferred implementations of this application are provided in the accompanying drawings. However, this application may be implemented in a plurality of different forms, and is not limited to the implementations described in this specification. On the contrary, an objective of providing these implementations is to enable a more thorough and comprehensive understanding of the disclosure of this application.

The following descriptions of the embodiments are shown with reference to accompanying drawings to illustrate specific embodiments that may be used to implement this application. A sequence number such as "first" or "second" of a component in this specification is merely used to distinguish between described objects, and does not have any sequence or technical meaning. In addition, unless otherwise specified, the term "connect" and "joint" in this application both include direct and indirect connection (joint). The directional terms mentioned in this application, for example, "upper", "lower", "front", "rear", "left", "right", "internal", "external", and "side", are merely directions based on the accompanying drawings. Therefore, the directional terms are used to better and more clearly describe and understand this application, instead of indicating or implying that a specified apparatus or element should have a specific orientation or be constructed and operated in a specific orientation. Therefore, this cannot be understood as a limitation on this application.

In the descriptions of this application, it should be noted that, unless otherwise specified and limited, terms "mount", "communicate", and "connect" will be understood in a broad sense, for example, may be a fixed connection, a detachable connection, or an integrated connection, may be a mechanical connection, may be a direct connection or an indirect connection by using an intermediate medium, or may be a connection between the inside of two elements. A person of ordinary skill in the art may understand specific meanings of the foregoing terms in this application based on specific situations. It should be noted that terms such as "first" and "second" in the specification, claims, and accompanying drawings of this application are used to distinguish between different objects, and are not used to describe a specific sequence. In addition, the terms "include", "may include", "comprise", or "may comprise" used in this application indicate existence of a disclosed corresponding function, operation, element, or the like, and do not limit one or more other functions, operations, elements, or the like. In addition, the term "include" or "comprise" indicates existence of corresponding features, numbers, steps, operations, elements, components, or combinations thereof disclosed in this specification, does not rule out existence or addition of one or more other features, numbers, steps, operations, elements, components, or combinations thereof, and is intended to cover non-exclusive inclusions.

Unless otherwise defined, all technical and scientific terms used in this specification have the same meaning as those commonly understood by those skilled in the art that belong to this application. The terms used in this specification of this application are merely intended to describe specific implementations, and are not intended to limit this application.

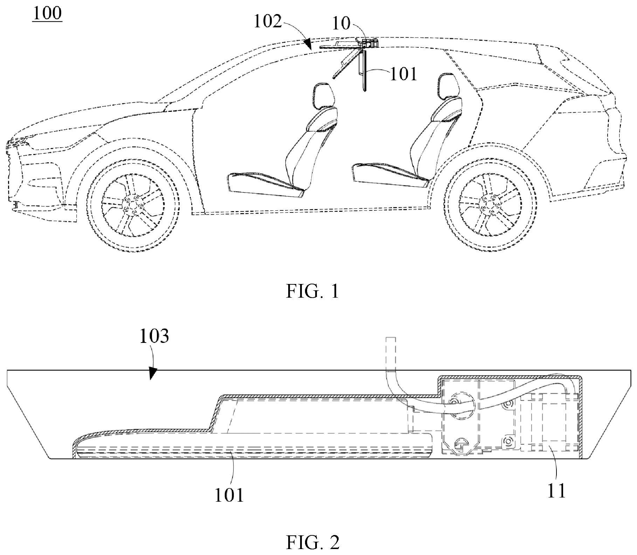

Referring to FIG. 1, FIG. 1 is a schematic diagram of a working scenario of a vehicle 100 of this application in an embodiment. As shown in FIG. 1, the vehicle 100 of this application includes a display screen 101 and a movable bracket 10, the movable bracket 10 is fixed to an interior compartment 102 of the vehicle 100, and the display screen 101 is configured to display an image.

Specifically, as shown in FIG. 1, the movable bracket 10 may, but is not limited to, be fixed to a top of the interior compartment 102, and is fixedly connected to the display screen 101, so as to move the display screen 101 and adjust a position of the display screen 101 relative to a user to accommodate viewing requirements of the user at different positions and angles.

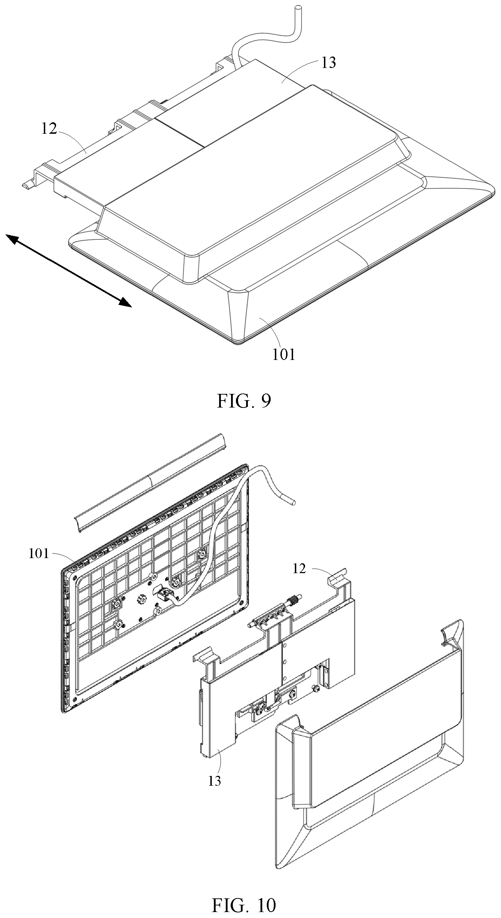

The movable bracket 10 includes a fixed support 11, a flipping mechanism 12, and a moving mechanism 13 (see FIG. 10). The fixed support 11 is fixed to the interior compartment 102, the flipping mechanism 12 is rotatably connected to the fixed support 11, and the moving mechanism 13 is disposed on the flipping mechanism 12.

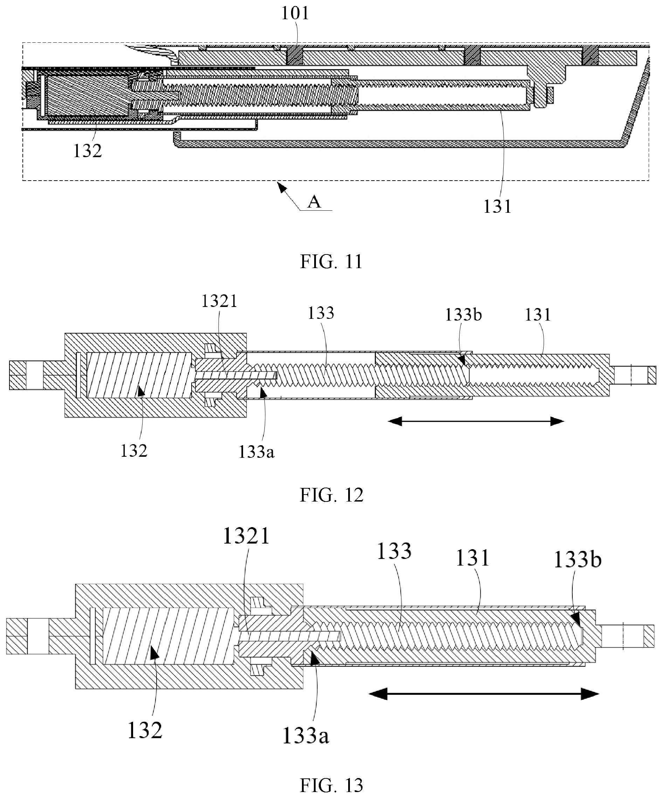

As shown in FIG. 1, one end of the flipping mechanism 12 is rotatably connected to the fixed support 11, and the other end of the flipping mechanism 12 is fixedly connected to the moving mechanism 13. The display screen 101 is fixed to a slidable moving member 131 in the moving mechanism 13 (see FIG. 11).

The fixed support 11 is configured to form a support and positioning effect on the flipping mechanism 12 or another functional structural member of the movable bracket, so as to ensure that the flipping mechanism 12 or another functional structural member implements respective functions thereof.

It should be noted that, in the embodiment shown in FIG. 1, possible placement positions of the movable bracket 10 and the display screen 101 are described by taking an example in which the movable bracket 10 is fixed to the top of the interior compartment 102 of the vehicle 100. However, a placement position of the movable bracket 10 in this application is not limited thereto.

In another embodiment of this application, a position to which the movable bracket 10 is fixed may alternatively be another possible implementation position in the interior compartment 102 of the vehicle 100. That is, the placement position of the movable bracket 10 can be adjusted based on requirements of the user for the display screen 101, which is not specifically limited in this application.

The flipping mechanism 12 is configured to drive the moving mechanism 13 and the display screen 101 to synchronously rotate.

In an embodiment, referring to FIG. 2, FIG. 2 is a schematic diagram of a structure of a movable bracket 10 of a vehicle 100 of this application from a side viewing angle in an embodiment. As shown in FIG. 2, the interior compartment 102 of the vehicle 100 is provided with a receiving cavity 103, the fixed support 11 of the movable bracket 10 is fixed in the receiving cavity 103, and the flipping mechanism 12 can drive the moving mechanism 13 and the display screen 101 to rotate and be received in the receiving cavity 103.

In the example of FIG. 2, the fixed support 11 is fixed on the top of the interior compartment 102, and the flipping mechanism 12 is configured to drive the display screen 101 to rotate out of the receiving cavity 103 and cause a display surface of the display screen 101 to face a seat in the vehicle 100, so that the user sitting in the seat can view an image displayed on the display surface of the display screen 101.

In addition, by fixing the fixed support 11 in the receiving cavity 103, the flipping mechanism 12, the moving mechanism 13, the display screen 101, or another functional structural member of the movable bracket 10 can be received in the receiving cavity 103, so as to achieve an effect of receiving and hiding the movable bracket 10, thereby improving simplicity in design and beauty of the interior compartment 102 of the vehicle 100.

For example, in a possible embodiment, as shown in FIG. 2, when the movable bracket 10 is received in the receiving cavity 103, a closed state of the movable bracket 10 can be formed, so that the display screen 101 can be received in the receiving cavity 103. This not only achieves an effect of receiving and protecting the display screen 101, but also prevents the display screen 101 from occupying space of the interior compartment 102 when being in a non-use state.

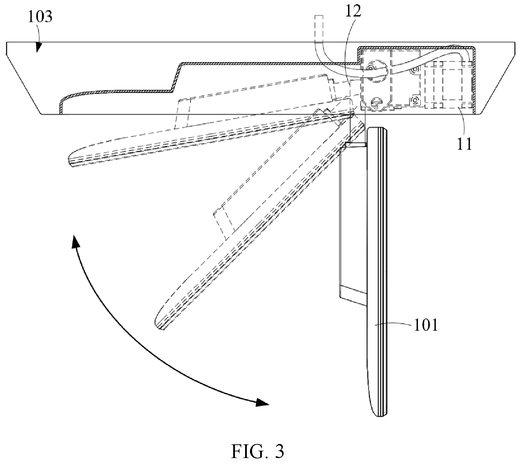

For example, in a possible embodiment, referring to FIG. 3, FIG. 3 is a schematic diagram of a structure of a movable bracket 10 of a vehicle 100 of this application from a side viewing angle in an embodiment. As shown in FIG. 3, when the user needs to use the display screen 101, the flipping mechanism 12 of the movable bracket 10 is rotated relative to the fixed support 11 to drive the moving mechanism 13 and the display screen 101 to synchronously rotate toward a direction away from the receiving cavity 103, that is, the display screen 101 can be rotated out of the receiving cavity 103 for the user to view a displayed image.

As shown in FIG. 3, the flipping mechanism 12 can drive the display screen 101 to rotate to different positions, so that the display screen 101 can adapt to and accommodate display at different angles and positions.

For example, in a possible embodiment, as shown in FIG. 3, after the display screen 101 is used, the flipping mechanism 12 of the movable bracket 10 can be rotated relative to the fixed support 11 to drive the moving mechanism 13 and the display screen 101 to synchronously rotate toward a direction close to the receiving cavity 103, that is, the display screen 101 can be received in the receiving cavity 103.

It will be understood that, through a rotatable connection between the flipping mechanism 12 and the fixed support 11, it can be ensured that the fixed support 11 achieves a support and positioning effect on the flipping mechanism 12, and the flipping mechanism 12 can be rotated relative to the fixed support 11, so as to drive the moving mechanism 13 and the display screen 101 that are fixed to the flipping mechanism 12 to synchronously rotate relative to the fixed support 11. An angle of the display screen 101 relative to the fixed support 11 is adjusted to accommodate viewing requirements of the user at different viewing angles.

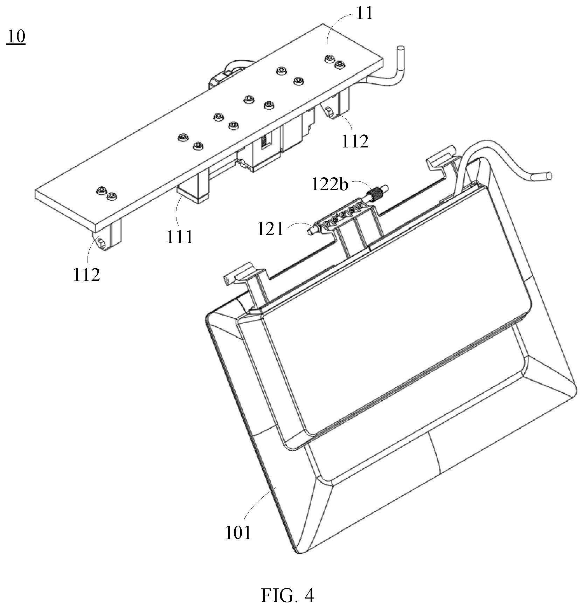

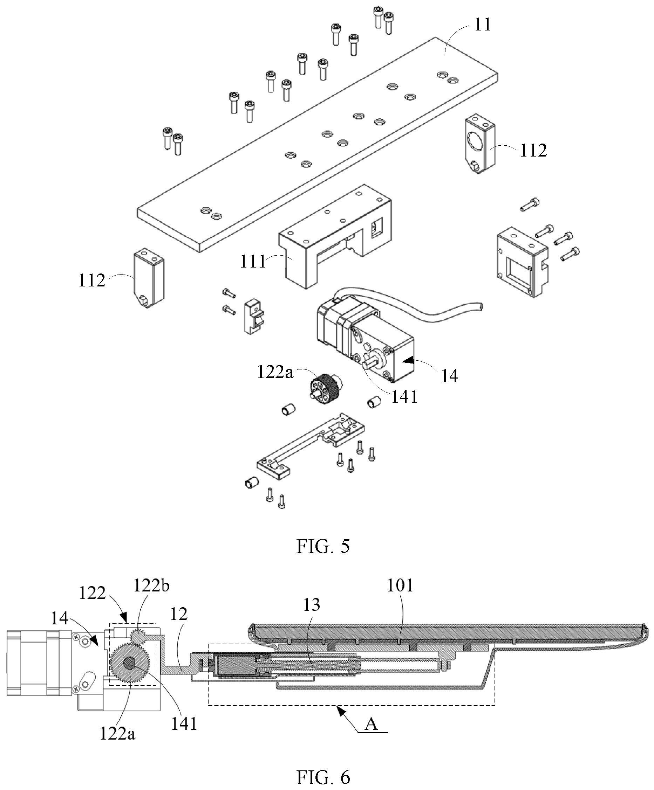

Furthermore, referring to FIG. 4 and FIG. 5 together, FIG. 4 is a schematic diagram of an exploded structure of a movable bracket 10 of a vehicle 100 of this application from a side viewing angle in an embodiment, with some portions of the structure hidden, and FIG. 5 is a schematic diagram of an exploded structure of a movable bracket 10 of a vehicle 100 of this application from a side viewing angle in the embodiment shown in FIG. 4 when some portions of the structure are hidden. As shown in FIG. 4 and FIG. 5, the movable bracket 10 includes a flipping motor 14; and the flipping motor 14 is fixed to the fixed support 11 and drivingly connected to the flipping mechanism 12, and the flipping motor 14 is configured to drive the flipping mechanism 12 to drive the moving mechanism 13 and the display screen 101 to synchronously rotate.

By providing the flipping motor 14, the flipping mechanism 12 can be driven to rotate, that is, a driving force is provided for rotation of the flipping mechanism 12, thereby driving the moving mechanism 13 and the display screen 101 to synchronously rotate.

Specifically, as shown in FIG. 4 and FIG. 5, the flipping mechanism 12 includes a rotating shaft 121, and an end of the flipping mechanism 12 that is close to the flipping motor 14 is fixed to the rotating shaft 121, so that the flipping mechanism 12 can achieve an effect of rotation relative to the fixed support 11. In another embodiment, an end of the flipping motor 14 that is close to the flipping mechanism 12 is fixed to the rotating shaft 121, so that the flipping mechanism 12 can achieve an effect of rotation relative to the fixed support 11.

The flipping motor 14 is drivingly connected to the rotating shaft 121, that is, a transmission connection between the flipping motor 14 and the flipping mechanism 12 is implemented through the rotating shaft 121. The flipping motor 14 drives the rotating shaft 121 to rotate to drive the flipping mechanism 12 to rotate, so that the moving mechanism 13 and the display screen 101 that are fixed to the flipping mechanism 12 can be driven to synchronously rotate relative to the fixed support 11, thereby implementing a function of adjusting an angle and a position of the display screen 101 by the movable bracket 10 in this application.

The fixed support 11 is provided with structural members such as a rotating shaft fixing block 111 and a rotating shaft support block 112 at a position corresponding to the rotating shaft 121 of the flipping mechanism 12, and the rotating shaft 121 may, but is not limited to, be rotatably connected to the fixed support 11 through cooperation of the rotating shaft fixing block 111 and the rotating shaft support block 112.

That is, a distance between the rotating shaft 121 and the fixed support 11 can be fixed through cooperation between structural members such as the rotating shaft fixing block 111 and the rotating shaft support block 112, so that a distance between the flipping mechanism 12 and the fixed support 11 remains unchanged. In addition, the rotating shaft 121 can be rotated around an axis of the rotating shaft 121, so as to achieve an effect of the flipping mechanism 12 rotating relative to the fixed support 11.

In an embodiment, as shown in FIG. 5, there is one flipping motor 14, and the one flipping motor 14 is located at a position close to any end of the rotating shaft 121 in an axis direction of the rotating shaft 121, and is drivingly connected to the rotating shaft 121. In this embodiment, by providing one flipping motor 14 to be rotatably connected to the rotating shaft 121, an effect of driving the rotating shaft 121 to rotate and driving the flipping mechanism 12 to rotate is ensured, a quantity of flipping motors 14 can be reduced to save costs, and structural design of the movable bracket 10 can be simplified.

It should be noted that, in the embodiments shown in FIG. 4 and FIG. 5, only an example in which a placement quantity of flipping motors 14 is one is used for description, but the placement quantity of flipping motors 14 is not limited thereto. In another embodiment of this application, the placement quantity and placement position of flipping motors 14 can be adjusted based on actual design requirements or the like, which is not specifically limited in this application.

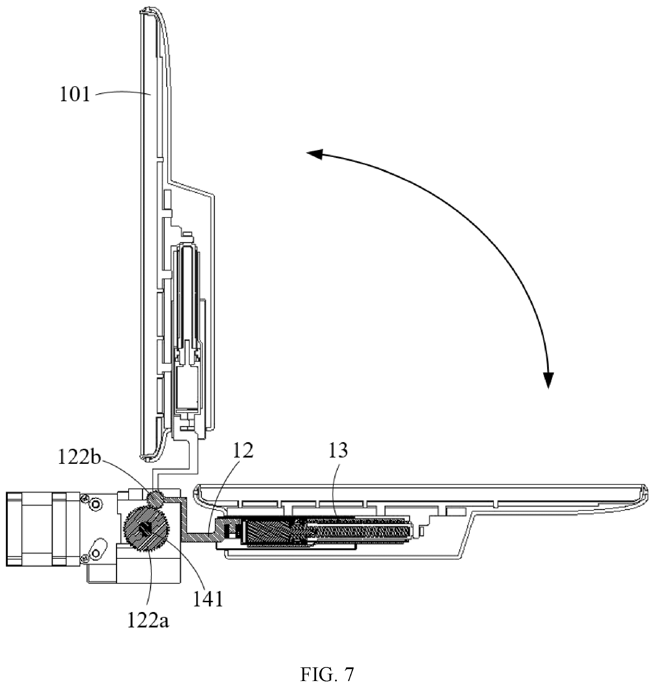

In an embodiment, referring to FIG. 6 and FIG. 7 together, FIG. 6 is a schematic diagram of a cross-sectional structure of a movable bracket 10 of a vehicle 100 of this application from a side viewing angle in an embodiment, and FIG. 7 is a schematic diagram of a cross-sectional structure of a movable bracket 10 of a vehicle 100 of this application from another side viewing angle in an embodiment. As shown in FIG. 6 and FIG. 7, the flipping mechanism 12 includes a gear set 122. Along an axis of rotation of the flipping mechanism 12 relative to the fixed support 11, the flipping motor 14 is located on a side of the flipping mechanism 12 and is drivingly connected to the gear set 122.

Specifically, as shown in FIG. 6, in a length direction of the flipping mechanism 12, the flipping motor 14 is located on a side of the rotating shaft 121 that is away from the display screen 101, and the flipping motor 14 is drivingly connected to the rotating shaft 121 through the gear set 122.

The gear set 122 includes a first gear 122a and a second gear 122b. The first gear 122a is coaxially fixed to a motor shaft 141 of the flipping motor 14 (also see FIG. 5), and the second gear 122b is coaxially fixed to the rotating shaft 121 (also see FIG. 4). The first gear 122a is meshed with the second gear 122b for transmission.

It will be understood that transmission between the flipping motor 14 and the rotating shaft 121 can be implemented through meshing between the first gear 122a and the second gear 122b. That is, when the flipping motor 14 drives the motor shaft 141 to rotate, the first gear 122a can be driven to synchronously rotate. Rotation of the first gear 122a drives rotation of the second gear 122b. Because the second gear 122b is coaxially fixed to the rotating shaft 121, the second gear 122b drives the rotating shaft 121 to rotate and synchronously drives the flipping mechanism 12 to rotate, thereby achieving an effect that the flipping mechanism 12 drives the moving mechanism 13 and the display screen 101 to rotate.

In other words, by arranging the first gear 122a to be meshed with the second gear 122b, an effect of transmission connection between the flipping motor 14 and the flipping mechanism 12 can be achieved, thereby enabling the flipping motor 14 to drive the flipping mechanism 12 to rotate and drive the moving mechanism 13 and the display screen 101 to rotate.

In an embodiment, as shown in FIG. 6 and FIG. 7, a gear radius of the first gear 122a is greater than a gear radius of the second gear 122b. By setting the gear radius of the first gear 122a to be greater than the gear radius of the second gear 122b, a deceleration effect of the gear set 122 can be achieved to improve smoothness during rotation of the flipping mechanism 12.

The gear radius of the first gear 122a is set to be greater than the gear radius of the second gear 122b to form a deceleration effect of the gear set 122, so that a transmission effect between the flipping motor 14 and the flipping mechanism 12 is achieved, and stability and smooth motion effects of the flipping motor 14 driving the flipping mechanism 12 to rotate can be improved, thereby avoiding a case in which the moving mechanism 13 and the display screen 101 may shake due to an excessively high rotational speed when the flipping mechanism 12 drives the moving mechanism 13 and the display screen 101 to rotate, which affects working stability of the moving mechanism 13 and the display screen 101.

That is, by providing the gear set 122, a protection effect can be formed on the moving mechanism 13 and the display screen 101, thereby further improving performance of the movable bracket 10 in this application. In addition, rotation of the flipping mechanism 12 is driven through cooperation between the gear set 122 and the flipping motor 14, so as to simplify structural design of the flipping mechanism 12 and reduce manufacturing costs of the movable bracket 10 in this application while a rotation function of the flipping mechanism 12 is implemented.

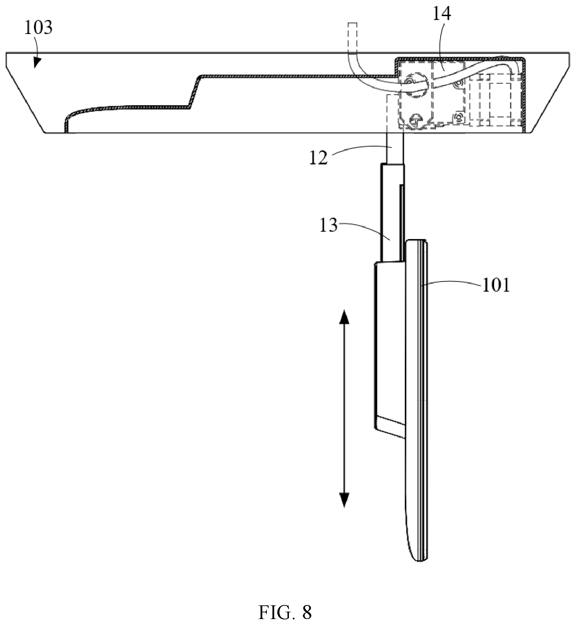

Furthermore, referring to FIG. 8 and FIG. 9 together, FIG. 8 is a schematic diagram of a structure of a movable bracket 10 of a vehicle 100 of this application from a side viewing angle in an embodiment, and FIG. 9 is a schematic diagram of a structure of a movable bracket 10 of a vehicle 100 of this application from another side viewing angle in an embodiment. The moving mechanism 13 further drives the display screen 101 to slide through the moving member 131 to adjust distance between the display screen 101 and the fixed support 11.

As shown in FIG. 8, when the flipping mechanism 12 drives the moving mechanism 13 and the display screen 101 to rotate toward the direction away from the receiving cavity 103, and both the moving mechanism 13 and the display screen 101 rotate out of the receiving cavity 103, through the moving member 131 of the moving mechanism 13, the display screen 101 can be driven to slide, and the distance between the display screen 101 and the fixed support 11 can be adjusted.

Specifically, referring to FIG. 10 and FIG. 11 together, FIG. 10 is a schematic diagram of an exploded structure of a movable bracket 10 of a vehicle 100 of this application from a side viewing angle in an embodiment, with some portions of the structure hidden, and FIG. 11 is an enlarged schematic diagram of a partial structure of a movable bracket 10 of a vehicle 100 of this application when viewed from a side viewing angle at position A in the embodiment shown in FIG. 6.

The moving mechanism 13 includes a slidable moving member 131, and is configured to fix the display screen 101. The moving member 131 of the moving mechanism 13 slides to adjust the distance between the display screen 101 and the fixed support 11, and a sliding direction of the moving member 131 is parallel to the length direction of the flipping mechanism 12.

As shown in FIG. 10 and FIG. 11, the flipping mechanism 12 is a plate-like structure, and the "length direction of the flipping mechanism 12" is a direction perpendicular to an axis direction of the flipping mechanism 12 rotating relative to the fixed support 11, which is referred to as the length direction of the flipping mechanism 12 in the specification of this application.

Specifically, as shown in FIG. 11, the moving mechanism 13 includes a moving motor 132, the moving motor 132 is fixed to the flipping mechanism 12 and drivingly connected to the moving member 131, and the moving motor 132 is configured to drive the moving member 131 to drive the display screen 101 to slide.

It will be understood that, by providing the moving motor 132, a driving force can be provided for sliding of the moving member 131 relative to the fixed support 11, so that the moving member 131 can drive the display screen 101 to slide relative to the fixed support 11.

It should be noted that, in the specification of this application, the "flipping motor 14" and the "moving motor 132" are distinguished only through different structural positions of the two motors, but possible actual structures, structural sizes, and the like of the two motors are not limited to be different. That is, actual structures, sizes, and the like of the flipping motor 14 and the moving motor 132 may be the same or different, which is not specifically limited in this application.

In an embodiment, referring to FIG. 12 and FIG. 13 together, FIG. 12 is a schematic diagram of a structure of a movable bracket 10 of a vehicle 100 of this application from a side viewing angle in the embodiment of FIG. 11 when some portions of the structure are hidden, and FIG. 13 is a schematic diagram of a structure of a movable bracket 10 of a vehicle 100 of this application from another side viewing angle in the embodiment of FIG. 11 when some portions of the structure are hidden. As shown in FIG. 12, the moving mechanism 13 includes a lead screw 133, and an extension direction of the lead screw 133 is parallel to the length direction of the flipping mechanism 12.

The moving member 131 includes a screw sleeve sleeved around the lead screw, the lead screw 133 is coaxially fixed to the motor shaft 1321 of the moving motor 132, and the lead screw 133 rotates to drive the screw sleeve (that is, the moving member 131) to drive the display screen 101 to slide.

Specifically, as shown in FIG. 12, because the lead screw 133 is coaxially fixed to the motor shaft 1321 of the moving motor 132, the lead screw 133 is driven to synchronously rotate when the motor shaft 1321 of the moving motor 132 rotates. The moving member 131, which is configured as the screw sleeve, cooperates with a thread of the lead screw 133, so that the moving member 131 slides in the extension direction of the lead screw 133 when the lead screw 133 rotates, thereby achieving an effect of the moving member 131 sliding in the length direction of the flipping mechanism 12.

The lead screw 133 has a first end 133a and a second end 133b that are opposite in an axial direction of the lead screw 133, and the first end 133a is closer to the moving motor 132 than the second end 133b. When the moving member 131 is located at different positions of the lead screw 133, distances between the display screen 101 and the fixed support 11 are different. That is, by adjusting a position of the moving member 131 relative to the lead screw 133, the distance between the display screen 101 and the fixed support 11 can be adjusted, so as to accommodate requirements of the user for the display screen 101 to be located at different height positions.

For example, as shown in FIG. 12, when the moving member 131 drives the display screen 101 to slide toward a direction away from the fixed support 11 in the length direction of the flipping mechanism 12, and the moving member 131 is located at a position of the second end 133b of the lead screw 133, the distance between the display screen 101 and the fixed support 11 is the maximum.

For example, when the moving member 131 drives the display screen 101 to slide toward a direction close to the fixed support 11 in the length direction of the flipping mechanism 12, and the moving member 131 is located at a position of the first end 133a of the lead screw 133, the distance between the display screen 101 and the fixed support 11 is the minimum, that is, the moving member 131 and the display screen 101 that is fixedly connected thereto are in a state of not moving.

It will be understood that, by providing cooperation between the lead screw 133 and the moving member 131 (the screw sleeve), a transmission connection between the moving motor 132 and the moving member 131 can be implemented, so that the moving motor 132 can drive the moving member 131 to drive the display screen 101 to slide.

In addition, transmission through the cooperation between the lead screw 133 and the screw sleeve can improve smoothness and motion stability of the moving member 131 driving the display screen 101 to slide, so as to avoid a case in which the display screen 101 shakes during sliding.

In an embodiment, when the moving member 131 of the movable bracket 10 slides to a minimum distance from the fixed support 11, a length size of the receiving cavity 103 is greater than a maximum distance between the display screen 101 and the fixed support 11.

In this embodiment, the length size of the receiving cavity 103 is set to be greater than the maximum distance between the display screen 101 and the fixed support 11, so that the moving member 131 can be received in the receiving cavity 103 when not extending out (as shown in FIG. 2).

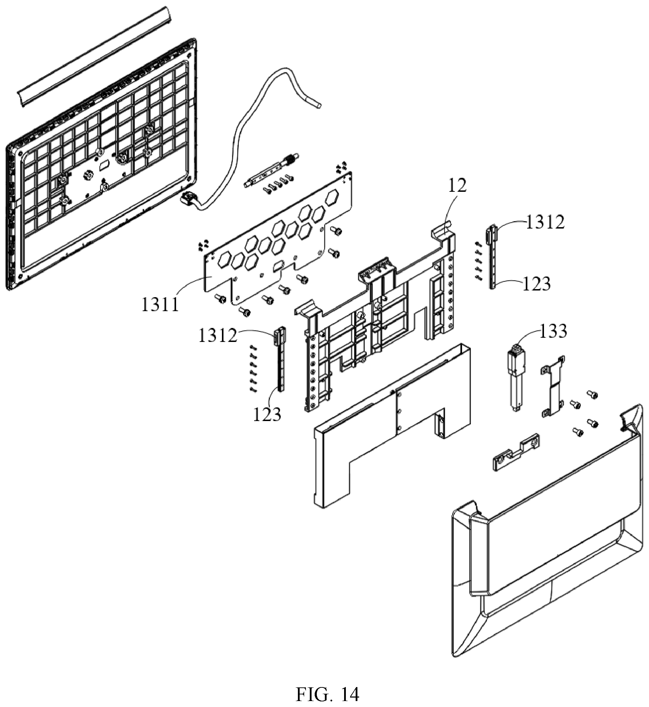

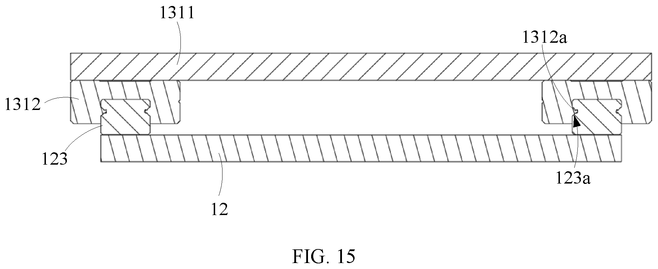

In an embodiment, referring to FIG. 14 and FIG. 15 together, FIG. 14 is a schematic diagram of an exploded structure of a movable bracket 10 of a vehicle 100 of this application from a side viewing angle in an embodiment, with some portions of the structure hidden, and FIG. 15 is a schematic diagram of a structure of a movable bracket 10 of a vehicle 100 of this application from a side viewing angle in the embodiment of FIG. 14 when some portions of the structure are hidden. The moving member 131 further includes a connecting plate 1311, the connecting plate 1311 is a plate-like structure, and a plane of the connecting plate 1311 is parallel to a plane of the flipping mechanism 12.

The connecting plate 1311 is fixedly connected between the screw sleeve and the display screen 101, and the screw sleeve drives the display screen 101 to move through the connecting plate 1311. That is, the screw sleeve is drivingly connected to the lead screw 133, the connecting plate 1311 is fixedly connected to the screw sleeve and is fixedly connected to the display screen 101. Therefore, when the screw sleeve moves relative to the lead screw 133, the screw sleeve can drive the connecting plate 1311 fixedly connected thereto to move, so as to drive the display screen 101 to move.

As shown in FIG. 14 and FIG. 15, a slide rail 123 and a slide block 1312 that cooperate with each other are provided between the moving member 131 and the flipping mechanism 12, the slide rail 123 extends in a direction parallel to the length direction of the flipping mechanism 12, and the slide rail 123 and the slide block 1312 are configured to limit sliding of the moving member 131 in the length direction of the flipping mechanism 12.

Specifically, the slide rail 123 is fixedly disposed on a surface of the flipping mechanism 12 that faces the connecting plate 1311 of the moving member 131, and the slide block 1312 cooperating with the slide rail 123 is fixedly disposed on a surface of the connecting plate 1311 that faces the flipping mechanism 12. The slide rail 123 can extend into the slide block 1312 and slide along the slide block 1312.

By providing cooperation between the slide rail 123 and the slide block 1312, a moving member 131 can be limited to drive the display screen 101 to slide in the length direction of the flipping mechanism 12, so as to avoid an undesirable phenomenon such as deviation or tilting during sliding of the moving member 131, thereby avoiding reducing displacement accuracy and sliding effect of the display screen 101.

That is, through cooperation between the slide rail 123 and the slide block 1312, moving accuracy of the display screen 101 relative to the fixed support 11 can be improved, and sliding effect and efficiency of the moving member 131 relative to the flipping mechanism 12 can be improved.

In an embodiment, as shown in FIG. 14, there are two slide rails 123 and two slide blocks 1312, and the two slide rails 123 and the two slide blocks 1312 are in a one-to-one correspondence. The two slide rails 123 are relatively parallel and respectively located on two opposite sides of the moving member 131, that is, the two slide rails 123 are respectively located on two opposite sides of the connecting plate 1311.

In an embodiment, as shown in FIG. 15, a side wall of each slide rail 123 is provided with at least one positioning groove 123a, and the at least one positioning groove 123a extends in the length direction of the flipping mechanism 12; and the slide block 1312 corresponding to the slide rail 123 is convexly provided with at least one protrusion portion 1312a.

One protrusion portion 1312a extends into one positioning groove 123a and can slide along the positioning groove 123a. A surface of the protrusion portion 1312a is attached to an inner wall of the positioning groove 123a.

In this embodiment, by providing cooperation between the positioning groove 123a and the protrusion portion 1312a, and arranging the surface of the protrusion portion 1312a to be attached to the inner wall of the positioning groove 123a, a close cooperation effect can be achieved between the slide rail 123 and the slide block 1312, so as to improve cooperation stability of the slide rail 123 and the slide block 1312, and avoid a case of loosening or shaking of the slide rail 123 and the slide block 1312 due to loose cooperation during sliding, thereby improving sliding stability of the moving member 131 relative to the flipping mechanism 12.

Due to differences in factors such as user height, a seat height, or a sitting position angle, when viewing the display screen 101, the user needs to adjust the display screen 101 to different inclination angles or height distances to accommodate viewing requirements of the user. The movable bracket generally fails to accommodate viewing requirements of users of different heights or at different height positions only by adjusting the angle of the display screen 101 relative to the user, thereby reducing the user experience.

However, in the movable bracket 10 of this application, by arranging the moving member 131 of the moving mechanism 13 to slide in the direction parallel to the length direction of the flipping mechanism 12, the moving member 131 drives the display screen 101 to slide in the length direction of the flipping mechanism 12, and the distance between the display screen 101 and the fixed support 11 can be adjusted, thereby enabling the display screen 101 to be located at different height positions to accommodate viewing requirements of the user for different height positions of the display screen 101.

In addition, through cooperation of the moving mechanism 13 and the flipping mechanism 12, the display screen 101 can display an image at different angles and positions, and a height position of the display screen 101 can also be adjusted, so as to accommodate viewing of users of different heights or with different requirements for a height of the display screen 101. Further, an adjustable range and dimensions of position of the display screen 101 can be improved, so as to improve user experience of the movable bracket 10 in this application.

Furthermore, because the vehicle 100 in this application is provided with the movable bracket 10 in any of the foregoing embodiments, the vehicle 100 in this application has all possible beneficial effects of the movable bracket 10 in any of the foregoing embodiments.

It will be understood that the terms such as "first" and "second" are used for a descriptive purpose only and shall not be construed as indicating or implying relative importance or implicitly indicating the quantity of the indicated technical features. Therefore, features defined with "first" and "second" may explicitly or implicitly include one or more of the features. In the descriptions of the implementations of this application, "a plurality of" means two or more, unless otherwise explicitly defined.

In the description of this specification, description of reference terms such as "an implementation", "some implementations", "illustrative implementation", "example", "a specific example", or "some examples" mean that specific features, structures, materials, or characteristics described with reference to the implementations or examples are included in at least one implementation or example of this application. In this specification, illustrative expressions of the foregoing terms do not necessarily refer to a same implementation or example. In addition, specific features, structures, materials, or characteristics described may be combined in an appropriate manner in any one or more implementations or examples.

It will be understood that the application of this application is not limited to the foregoing examples. A person of ordinary skill in the art may make improvements or changes according to the foregoing description, and all the improvements and changes shall fall within the protection scope of the claims appended to this application. A person of ordinary skill in the art may understand that all or some of procedures for implementing the foregoing embodiments and equivalent modifications made according to the claims of this application shall fall within the scope of this application.

## Claims

1. A movable bracket (10) for a display screen (101), wherein the movable bracket (10) comprises a fixed support (11), a flipping mechanism (12), and a moving mechanism (13), the flipping mechanism (12) is rotatably connected to the fixed support (11), and the moving mechanism (13) is disposed on the flipping mechanism (12); and
the flipping mechanism (12) is configured to drive the display screen (101) to rotate relative to the fixed support (11), and the moving mechanism (13) is configured to drive the display screen (101) to move to adjust a distance between the display screen (101) and the fixed support (11).

2. The movable bracket (10) according to claim 1, wherein the movable bracket (10) further comprises a flipping motor (14), the flipping motor (14) is fixed to the fixed support (11) and drivingly connected to the flipping mechanism (12), and the flipping motor (14) is configured to drive the flipping mechanism (12) to drive the display screen (101) to rotate.

3. The movable bracket (10) according to claim 2, wherein the flipping motor (14) is drivingly connected to the flipping mechanism (12) through a gear set (122).

4. The movable bracket (10) according to claim 2 or 3, wherein the flipping mechanism (12) comprises a rotating shaft (121), the fixed support (11) is provided with a rotating shaft fixing block (111) and a rotating shaft support block (112) at a position corresponding to the rotating shaft (121) of the flipping mechanism (12), and the rotating shaft fixing block (111) and the rotating shaft support block (112) cooperate with each other to rotatably connect the flipping mechanism (12) to the fixed support (11).

5. The movable bracket (10) according to any one of claims 2 to 4, wherein the flipping motor (14) is located on a side of the rotating shaft (121) that is away from the display screen (101) in a length direction of the flipping mechanism (12), and the flipping motor (14) and the rotating shaft (121) are drivingly connected through the gear set (122).

6. The movable bracket (10) according to claim 4, wherein the gear set (122) comprises a first gear (122a) and a second gear (122b), the first gear (122a) is coaxially fixed to a motor shaft of the flipping motor (14), the second gear (122b) is coaxially fixed to the rotating shaft (121), the first gear (122a) is meshed with the second gear (122b) for transmission, and a gear radius of the first gear (122a) is greater than a gear radius of the second gear (122b).

7. The movable bracket (10) according to any one of claims 1 to 6, wherein the moving mechanism (13) comprises a moving member (131) movable relative to the flipping mechanism (12), and the moving member (131) is configured to fix the display screen (101).

8. The movable bracket (10) according to claim 7, wherein the moving mechanism (13) comprises a moving motor (132), the moving motor (132) is fixed to the flipping mechanism (12) and drivingly connected to the moving member (131), and the moving motor (132) is configured to drive the moving member (131) to drive the display screen (101) to slide.

9. The movable bracket (10) according to claim 8, wherein the moving mechanism (13) further comprises a lead screw (133), the moving member (131) comprises a screw sleeve sleeved around the lead screw (133), the lead screw (133) is coaxially fixed to a motor shaft of the moving motor (132), and the lead screw (133) rotates to drive the screw sleeve to cause the display screen (101) to slide.

10. The movable bracket (10) according to claim 9, wherein an extension direction of the lead screw (133) is parallel to the length direction of the flipping mechanism (12).

11. The movable bracket (10) according to claim 9 or 10, wherein the moving member (131) further comprises a connecting plate (1311), and the connecting plate (1311) is a plate-like structure; and
the connecting plate (1311) is fixedly connected between the screw sleeve and the display screen (101), and the screw sleeve drives the display screen (101) to move through the connecting plate (1311).

12. The movable bracket (10) according to any one of claims 7 to 11, wherein a slide rail (123) and a slide block (1312) that cooperate with each other are provided between the moving member (131) and the flipping mechanism (12), the slide rail (123) extends in the length direction of the flipping mechanism (12), and the slide rail (123) and the slide block (1312) are configured to limit sliding of the moving member (131) in the length direction of the flipping mechanism (12).

13. The movable bracket (10) according to claim 12, wherein a side wall of each slide rail (123) is provided with at least one positioning groove (123a), and the at least one positioning groove (123a) extends in the length direction of the flipping mechanism (12); and
the slide block (1312) corresponding to the slide rail (123) is convexly provided with at least one protrusion portion (1312a), and one protrusion portion (1312a) extends into one positioning groove (123a) and can slide along the positioning groove (123a), wherein a surface of the protrusion portion (1312a) is attached to an inner wall of the positioning groove (123a).

14. The movable bracket (10) according to claim 12 or 13, wherein the slide block (1312) is fixedly disposed on a surface of the connecting plate (1311) that faces the flipping mechanism (12), and the slide rail (123) is fixedly disposed on a surface of the flipping mechanism (12) that faces the connecting plate (1311).

15. A vehicle (100), comprising a display screen (101) and the movable bracket (10) according to any one of claims 1 to 14, wherein the movable bracket (10) is fixed to an interior compartment (102) of the vehicle (100), and the display screen (101) is configured to display an image.

16. The vehicle (100) according to claim 15, wherein the interior compartment (102) of the vehicle (100) is provided with a receiving cavity (103), the fixed support (11) of the movable bracket (10) is fixed in the receiving cavity (103), and the flipping mechanism (12) can drive the display screen (101) to rotate and be received in the receiving cavity (103).

17. The vehicle (100) according to claim 15 or 16, wherein the moving mechanism (13) comprises a moving member (131) movable relative to the flipping mechanism (12), the moving member (131) is configured to fix the display screen (101), and when the moving member (131) of the movable bracket (10) slides to a minimum distance from the fixed support (11), a length size of the receiving cavity (103) is greater than a maximum distance between the display screen (101) and the fixed support (11).

18. The vehicle (100) according to claim 16 or 17, wherein the fixed support (11) is fixed to a top of the interior compartment (102); and
the flipping mechanism (12) is configured to drive the display screen (101) to rotate out of the receiving cavity (103), and cause a display surface of the display screen (101) to face a seat in the vehicle (100).
